# EUROPEAN PATENT APPLICATION

(11) **EP 2 270 971 A1**
(43) Date of publication of application: **05.01.2011**
(21) Application number: 09164402.1
(22) Date of filing: 02.07.2009
(51) Int. Cl.: H02M 7/483

(54) **Three-stage multilevel DC to AC converter**

(71) Applicant: ABB Research Ltd., 8050 Zürich (CH)
(72) Inventor: Coccia, Antonio, 5400 Baden (CH); Escobar, Gerardo, 5400 Baden (CH); Serpa, Leonardo-Augusto, 5400 Baden (CH); Paakkinen, Mikko, 5400 Baden (CH); Pettersson, Sami, 5400 Baden (CH)
(74) Representative: Valkeiskangas, Tapio Lassi Paavali

(57) **Abstract**

A converter for converting a DC voltage into AC voltage, the converter comprising a DC to DC converter (2), an inverter (3) for inverting the DC voltage provided by the DC to DC converter (2) to an AC voltage, wherein the inverter is operated at the fundamental frequency of the produced AC voltage and the DC to DC converter (2) is a three-level Buck converter comprising two controllable switches (S1, S2) connected in series, the first end of the series connection forming the positive input point (4) and the second end of the series connection forming the positive output point (8) of the DC to DC converter, the polarities of the switches (S1, S2) being such that they allow current to flow from the positive input point to the positive output point, two diodes (D1, D2) connected in series between the positive output point (8) and a negative bus (5) of the DC to DC converter, the polarities of the diodes being such that they allow current to flow from the negative bus (5) to the positive output point (8) and a capacitor (C1), whose first terminal is connected to the point between the controllable switches (S1, S2) and second terminal is connected to the point between the diodes (D1, D2).

## Description

### FIELD OF THE INVENTION

The present invention relates to DC to AC converters, and particularly to a converter topology having low losses.

### BACKGROUND OF THE INVENTION

Renewable energy sources have become more and more attractive in recent years for producing electrical energy. Instead of larger plants, electrical energy can be produced in a distributed manner using renewable energy sources, such as solar power and wind power. In most cases electrical energy from photovoltaic panels (PV panels) and wind mills is not usable as such and the energy must be converted to be suitable for consuming it or for feeding it to the grid. This conversion of electrical energy should be carried out with high efficiency so that the losses occurring during the conversion are kept minimal. Typically the electrical energy is converted into alternating voltage having a fixed amplitude and frequency so that the energy can be fed to the grid or consumed directly with appliances that can be operated with grid voltage.

The PV panels have a large capacitance to ground. This capacitance has to be taken into account when designing the inverter structure. If common mode voltages are present at the output of the inverter, high frequency common mode currents may flow through the capacitance and possibly damage the panel. The inverters that are suitable to be used in connection with PV panels can be divided into isolated and non-isolated topologies. In isolated topologies a transformer is used to isolate the PV panel from voltage generated to the output of the inverter and thereby break the current path for the common mode current. A drawback of isolated structures is the transformer, which is a bulky and costly component.

In non-isolated structures the common mode current is avoided by using switch components in such a manner that fluctuating common mode voltage is not produced or that the output and input are separated during specific periods.

A typical non-separated inverter topology consists of two stages. The first stage takes care of tracking the maximum power from the PV panel and produces a DC voltage for the second stage. The second stage, which is the inverting stage, produces alternating voltage having fixed frequency and amplitude. The inverter stage is typically implemented as a pulse width modulated (PWM) bridge which produces two or more voltage levels at the inverter output. To reduce the size of the passive components, such as filter inductors, the modulation frequency of the inverter is typically high, which results in high switching losses reducing the total efficiency of the system. In addition, due to stray capacitances between the inverter terminals and the ground potential, the high frequency PWM voltage may generate common-mode currents which may cause problems in the system.

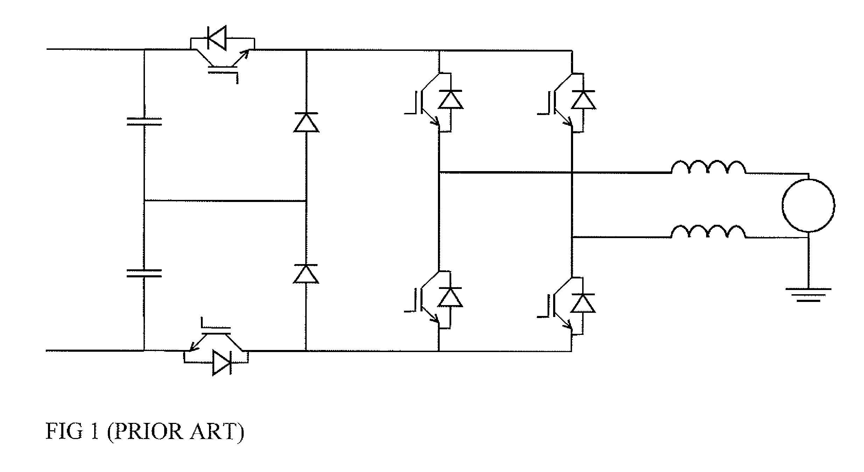

Document WO08/015298 A1 discloses a three-level Buck converter in connection with a low frequency inverter. The main circuit of this topology is presented in Figure 1. In this topology the Buck converter is using pulse width modulation and the voltage source inverter (VSI) operates at the fundamental supply frequency inverting the output DC voltage produced by the Buck converter into AC voltage. The supply current is controlled by adjusting the voltage reference of the Buck converter.

However, even though the switches of the inverter are operated at the fundamental frequency, the anti-parallel diodes of the inverter bridge are still switching at high frequency. Furthermore, since the inverter generates PWM voltage at its AC terminals, the high-frequency common-mode voltage may generate harmful common-mode currents. Also, if the displacement angle between the supply current and the fundamental output voltage of the inverter is larger than a couple of degrees, the switching of the inverter generates large voltage spikes because the current is not zero at the switching instant.

### BRIEF DESCRIPTION OF THE INVENTION

An object of the present invention is to provide a DC to AC converter so as to solve the above problems. The objects of the invention are achieved by a converter which is characterized by what is stated in the independent claim. The preferred embodiments of the invention are disclosed in the dependent claims.

The invention is based on using a converter topology consisting of two or more stages. The output stage is formed of an inverter switching at the grid frequency and the stage feeding DC voltage to the inverter is formed of a three-level Buck converter having a flying capacitor. The use of a flying capacitor topology in the three-level Buck converter eliminates any needs for voltage balancing in the series connected capacitors.

The inverter stage of the present invention can be implemented as a voltage source inverter (VSI) or as a current source inverter (CSI).

An advantage of the converter of the invention is that due to the structure of the converter the losses are still minimized. Losses are minimized in the switching components because the switch components in the inverter part do not require anti-parallel diodes.

Further, the use of a three-level converter having a flying capacitor eliminates the need for balancing capacitor voltages. Three level DC voltage is commonly generated by using series connected capacitors having a center tap as also disclosed in Figure 1. These kinds of structures require that the voltage is actively balanced between the capacitors thereby making control of the active switch components more complicated.

Since three voltage levels are generated with the converter feeding the inverter, the output of the inverter consist of five voltage levels. As the number of voltage levels is increased, the amount of filtering required making voltage and current waveforms sinusoidal is decreased. This means smaller and cheaper passive components.

### BRIEF DESCRIPTION OF THE DRAWINGS

In the following the invention will be described in greater detail by means of preferred embodiments with reference to the accompanying drawings, in which
Figure 1 is a prior art circuit
Figure 2 shows a main circuit of an embodiment of the present invention in which the inverter is implemented as a voltage source inverter;
Figure 3 shows simulated current of an input boost converter of the embodiment of Figure 2;
Figure 4 shows simulated output voltage waveform of the boost converter of the embodiment of Figure 2;
Figure 5 shows simulated output voltage of the inverter of the embodiment of Figure 2;
Figure 6 shows simulated line voltage and current obtained with the embodiment of Figure 2,
Figure 7 shows simulated inverter switch component voltage and current of the embodiment of Figure 2,
Figure 8 shows a main circuit of an embodiment of the present invention in which the inverter is implemented as a current source inverter,
Figure 9 shows simulated supply voltage of the embodiment of Figure 8,
Figure 10 shows simulated AC capacitor voltage of the embodiment of Figure 8,
Figure 11 shows simulated supply current of the embodiment of Figure 8,
Figure 12 shows simulated DC side inductor current of the embodiment of Figure 8, and
Figure 13 shows simulated output voltage of the three-level Buck converter of the embodiment of Figure 8.

### DETAILED DESCRIPTION OF THE INVENTION

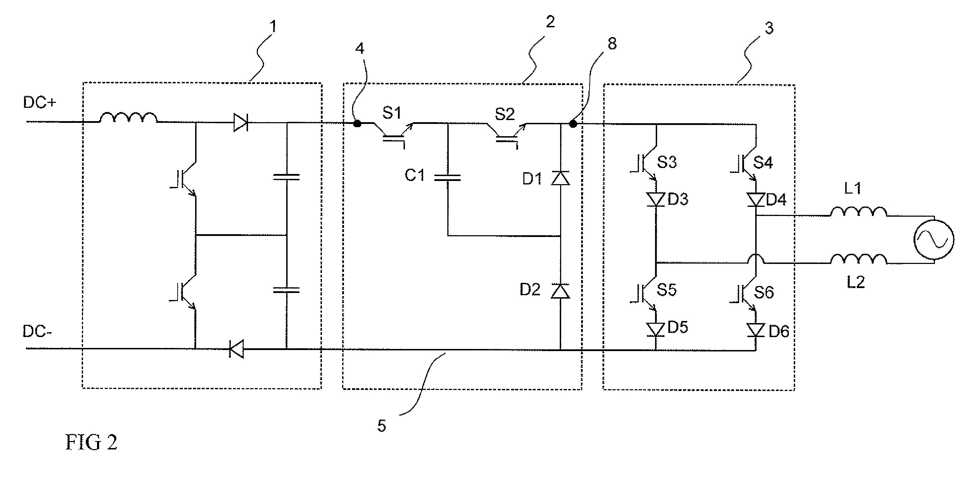

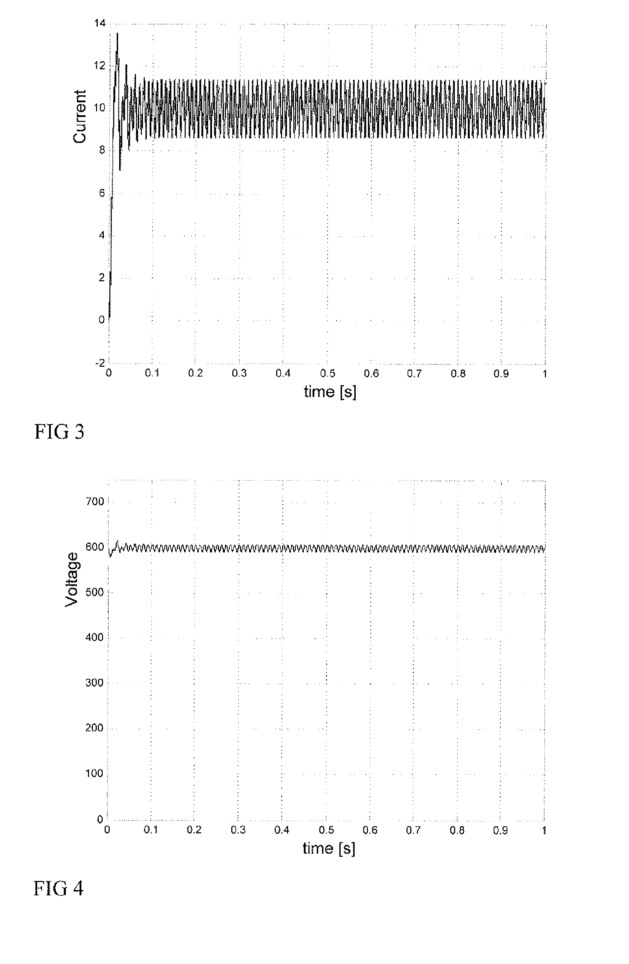

Figure 2 shows an embodiment of the present invention in which an inverter stage i.e. the output stage 3 is implemented as a voltage source inverter. The first stage 1, i.e. a three level boost converter, is shown in the Figure 2 as an option for connecting the converter of the invention to a DC voltage supply. As mentioned, the boost converter is connected to a DC voltage supply and it produces a stabilized voltage from the voltage source. The voltage source may be a fuel cell, rectified output of a generator, one or more solar cells connected to provide a DC voltage or any other DC voltage source. Other purpose of the first stage is to function as a maximum power point tracker, which is used to extract maximum power from the DC source such as from a solar panel. Figure 3 shows a simulated current waveform measured in the boost converter during the start up of the device and Figure 4 shows output voltage of the boost converter. The operation of a three level boost converter shown in Figure 2 is known per se, and is omitted here.

As a second stage, i.e. receiving DC voltage from the boost converter, there is provided a three-level Buck converter with a flying capacitor. The positive input point 4 of the Buck converter is connected to the positive voltage of DC voltage from the boost converter and a negative bus 5 of the Buck converter is connected to the negative voltage of DC voltage from the boost converter.

The three-level Buck converter comprises first and second controlled switch components S1, S2 connected in series. The controlled switches may be, for example, IGBTs. The components are connected in series such that a collector of the first switch component forms the positive input point 4 and the emitter of the first component is connected to the collector of the second component. The emitter of the second switch component further forms the positive output point 8 of the Buck converter.

The three-level Buck further comprises two diodes D1, D2 connected in series between the negative bus 5 and a positive output point 8 of the Buck converter. The diodes are connected in series with the same polarity such that current can pass from the negative bus to the positive output point. Further the three-level Buck converter comprises a capacitor C1, one terminal of which is connected between the switch components S1, S2 and the other terminal between the diodes D1, D2.

The operation of the three level Buck converter is as follows. As mentioned, the converter has two controlled switch components S1 and S2. The basic principle in control of the switches is to give similar control to both components with a 180 degree phase shift. Thus when the duty cycle of the switches is below 50%, the switches are conducting at different times. When duty cycle is below 50% and the switch S1 is conducting, the output voltage from the Buck converter is the input voltage to the Buck converter minus capacitor C1 voltage. During the operation, the capacitor voltage settles to half the input voltage to the Buck converter. When, on the other hand the switch S2 conducts, the voltage at the output of the Buck converter is the capacitor voltage. Thus with duty cycles below 50%, the output of the Buck converter is half of the input voltage to the Buck converter when either of the switches is conducting and zero when the switches are in the blocking state.

At duty cycles 50% or above 50%, one or both of the switches S1, S2 are conducting. When only one of the switches is conducting, the situation is as above and voltage equal to half the input voltage is connected to the output of the Buck converter. When both switches S1 and S2 are conducting, voltage at the output is same as the input voltage. Thus the magnitude of the voltage at the output is either half the input voltage or the input voltage. Thus when the duty cycle of the switches is changed, the three-level Buck converter produces voltage levels corresponding to zero, half the input voltage or input voltage.

The output of the three-level Buck converter is further connected to the input of an inverter stage 3. The inverter is operated at the fundamental frequency of the output voltage. The output voltage refers to the voltage generated by the inverter and the inverter thus merely inverts half the voltage waveform of the DC voltage generated by the Buck converter. As seen in Figure 2, the inverter comprises two pairs of switch components connected between the positive output and negative output of the Buck converter. The switches of the inverter are controlled in pairs such that switches S3 and S6 are controlled conductive at the same time, and, respectively, switches S4 and S5 are controlled conductive at the same time. As can be seen in Figure 2, each switch of the inverter comprises a diode D3, D4, D5, D6 connected in series. The diodes are used for blocking reverse voltage.

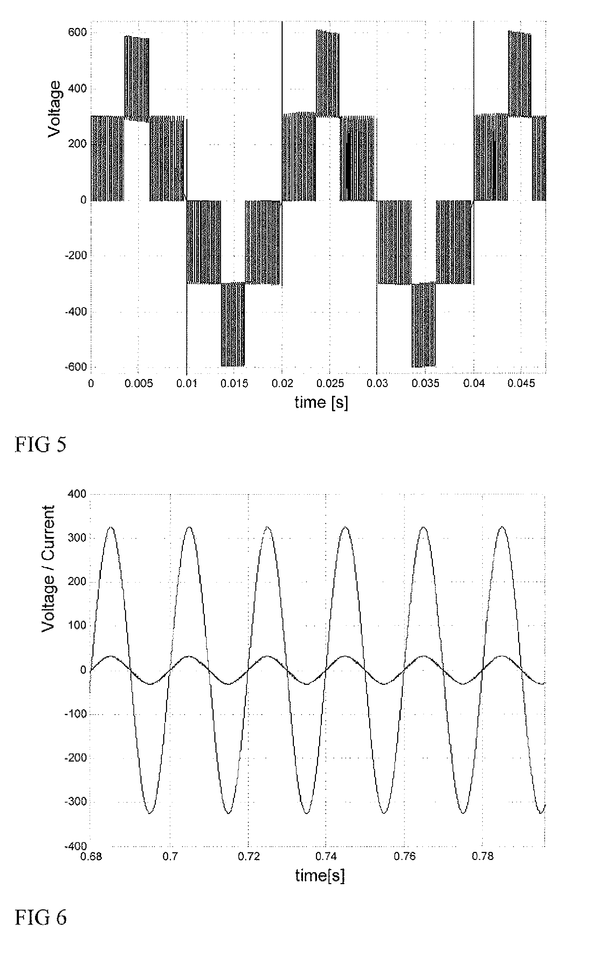

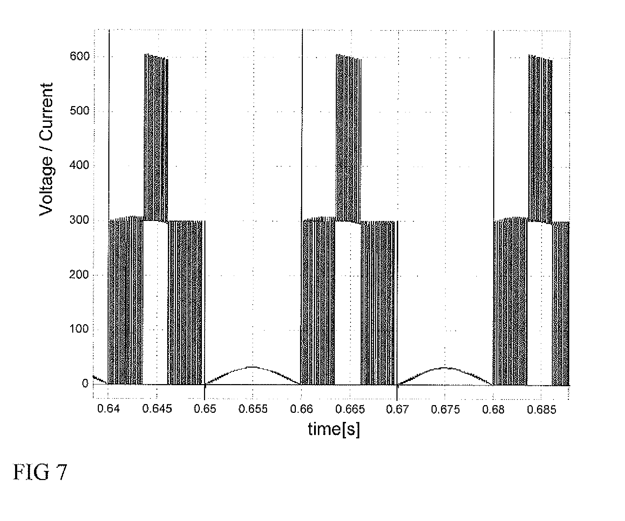

The functioning of the present invention is better understood with reference to Figures 5 and 7. Figure 5 shows voltage at the output of the inverter stage. The inverter inverts half of the DC voltage generated by the Buck converter for obtaining a five-level AC voltage from three-level DC voltage. Thus the output voltage from the Buck converter is the waveform of Figure 5 if the halfwaves below zero were rectified. Figure 7 shows the waveform of voltage over one switch component of the inverter and the current through the same. As can be seen from Figure 7, the switch conducts half of the output voltage period and blocks the other half of the period.

When the output of the inverter is connected to the grid for feeding power, the output voltage should be filtered. Figure 2 shows inductances L1, L2 connected to the output of the inverter between the inverter and the grid. Figure 6 shows simulated current and voltage waveforms after the inductances and it can be seen that both the voltage and current waveforms are quite sinusoidal. If a better attenuation for the switching frequency current ripple is needed, the filter in the output of the inverter can be implemented as an LCL type structure.

The inverter is preferably operated at a unity power factor, which means that the grid voltage and the inverter current have to be in phase with each other. For generating the current reference for the inverter, the phase angle of the grid voltage has to be determined with, for example, a phase locked loop. For the current control the AC current fed to the grid is measured. Current controller is thus tracking an AC variable. The magnitude of current is given by an MPPT which ensures that the inverter operates with the PV panel in the most effective way.

The switching instants of the inverter 3 are synchronized to the zero crossings of the inverter current i.e. to zero crossings of the grid voltage. Since the inverter is inverting PWM voltage, the switching causes voltage spikes, which are reverse voltage spikes for the IGBTs of the inverter. For preventing damage to the IGBT components the inverter requires reverse voltage blocking diodes D3, D4, D5, D6 in series with the IGBTs.

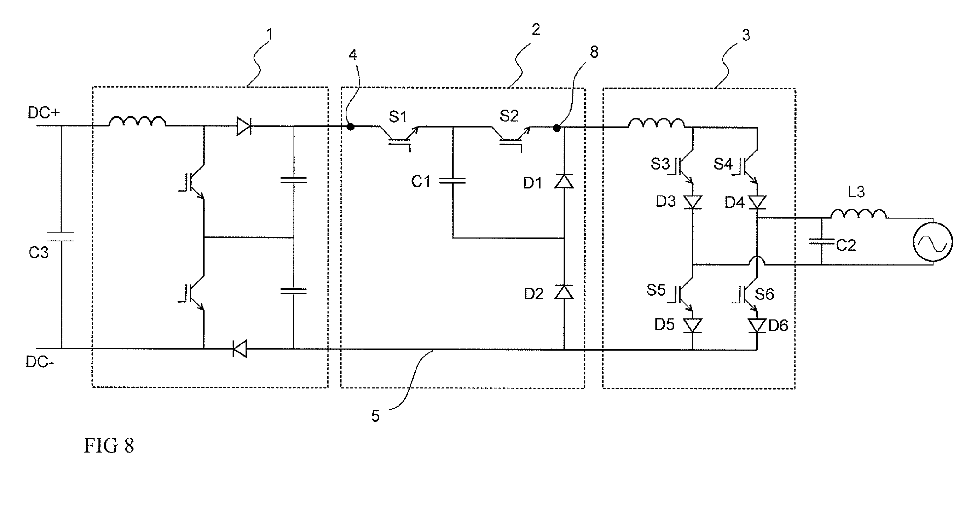

According to another embodiment of the invention the inverter of the converter is implemented as a current source inverter. Figure 8 shows the implementation of the converter with the current source inverter stage. When compared with Figure 2 only the structure of the inverter has been changed. The structure is changed by insertion of an inductance L4 to the positive input of the inverter.

In the case of the current source inverter, the current of the inverter can be controlled in the DC side of the inverter with the output voltage of the Buck converter. The DC side inductor current waveform has the shape of full-wave rectified sinusoidal current and the AC side current is formed by inverting the DC side current with the current source inverter. In the DC side current control the DC current of the inductance L4 is measured and controlled to a desired value. If desired, the current control can also be implemented in the AC side as in the case of the voltage source inverter.

In the current source inverter the switching of the active switches are synchronized with the zero points of the DC side current. This means that when the current at the input of the inverter drops to zero, the state of the inverter is changed. This further means that the switching losses in the inverter are practically zero.

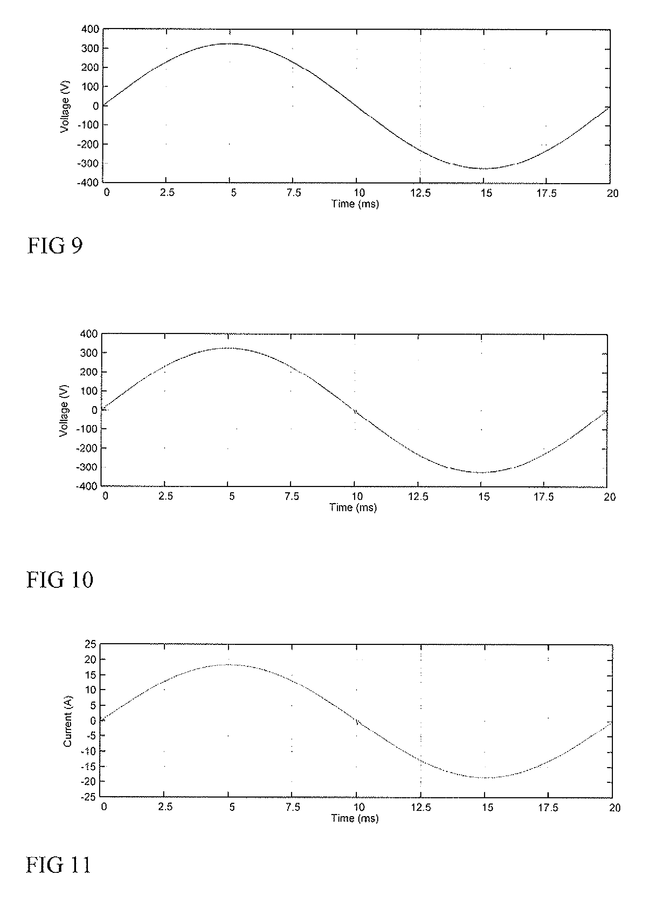

As the control of the converter in the above embodiments is based on the DC current, the output voltage waveform is not generated according to any pattern. The three-level Buck converter is controlled to form a voltage that gives the desired current. In other words a current controller controls the three-level Buck converter to produce the desired current. Since the desired current waveform is sinusoidal in most cases, the generated voltage is typically also sinusoidal. Figure 9 shows a simulated supply voltage waveform using the circuit of Figure 8. The supply voltage is filtered using a capacitor and an inductor in the output of the converter. As seen in Figure 9, the output voltage is sinusoidal. Figure 10 further shows the voltage of the filter capacitor C2 and Figure 11 shows the simulated waveform of the supply current, which is controlled to have a sinusoidal waveform.

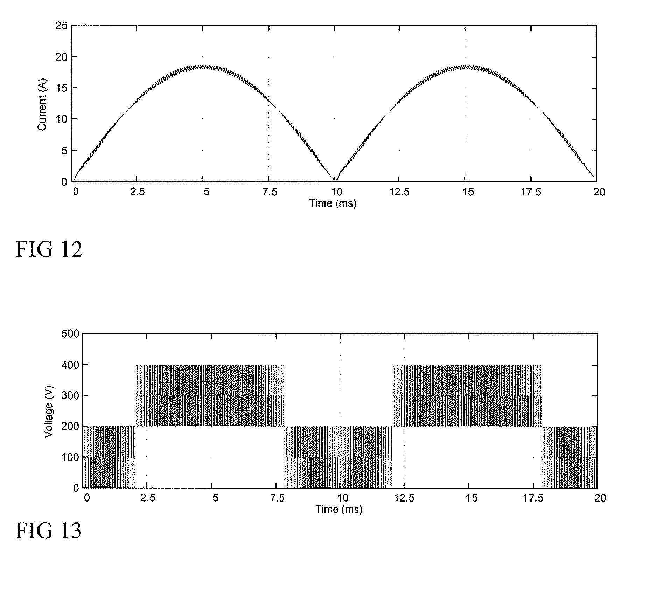

The control of current is more clearly seen from Figure 12, which shows simulated DC-side inductor current. As seen from the waveform, the current has a small ripple component having its maximum at the points of highest amplitudes. The ripple from the current is effectively removed with the output filter structure. Figure 13 shows the output voltage from the three-level Buck converter. Since the voltage at the inverter output is not a PWM-voltage, the topology does not produce high-frequency common-mode voltage.

The simulations of the present invention with a current source inverter were carried out with the following parameters and component choices. The power rating of the simulated system was 3 kW and the simulations were carried out at full power without the boost converter 1. The inverter was connected to a 230-V and 50-Hz single-phase power supply and the input DC voltage was 400 V. The Buck converter was operated using a 25-kHz modulation frequency. The inductance of the dc side inductor L4 was 1 mH (1.8 % p.u.) and that of the ac side inductor (L3) 200 µH (0.4 % p.u.). The capacitance of the input capacitor C3, the capacitor in the Buck converter C1 and the ac side capacitor C2 were 1 mF (5.5 p.u.), 100 µF (0.6 p.u.) and 1 µF (0.6 % p.u.), respectively.

When the DC to AC converter is supplying power to the grid, the inverter of the converter has to be synchronized with the grid. This is carried out by determining the phase and frequency of the grid and synchronizing the current produced with the inverter to the phase of the grid. Further, for feeding power to the grid the voltage produced by the DC to AC converter has to be slightly higher than the voltage of the grid. When the voltage of the voltage source is not high enough, the first stage, which is the three-level boost converter 1 in the Figures 2 and 8, should be used. For the purpose of boosting the input voltage other types of converters may also be used.

In the above reference is made to photovoltaic panels. It is clear that DC voltage fed to the converter of the present invention can be produced with multiple of PV panels, strings or arrays of such panels.

It will be obvious to a person skilled in the art that, as the technology advances, the inventive concept can be implemented in various ways. The invention and its embodiments are not limited to the examples described above but may vary within the scope of the claims.

## Claims

1. A converter for converting a DC voltage into AC voltage, the converter comprising a DC to DC converter (2), **characterized in that** the converter comprises
an inverter (3) for inverting the DC voltage provided by the DC to DC converter (2) to an AC voltage, wherein the inverter is operated at the fundamental frequency of the produced AC voltage and
the DC to DC converter (2) is a three-level Buck converter comprising
two controllable switches (S1, S2) connected in series, the first end of the series connection forming the positive input point (4) and the second end of the series connection forming the positive output point (8) of the DC to DC converter, the polarities of the switches (S1, S2) being such that they allow current to flow from the positive input point to the positive output point,
two diodes (D1, D2) connected in series between the positive output point (8) and a negative bus (5) of the DC to DC converter, the polarities of the diodes being such that they allow current to flow from the negative bus (5) to the positive output point (8) and
a capacitor (C1), whose first terminal is connected to the point between the controllable switches (S1, S2) and second terminal is connected to the point between the diodes (D1, D2).

2. A converter according to claim 1, **characterized in that** the inverter (3) is a current-controlled voltage source inverter.

3. A converter according to claim 2, **characterized in that** the output of the inverter is equipped with inductances (L1, L2).

4. A converter according to claim 1, **characterized in that** the inverter (3) is a current source inverter.

5. A converter according to claim 4, **characterized in that** the inverter comprises an inductance (L4) connected between the output of the DC to DC converter (2) and input of the inverter (3).

6. A converter according to claim 5, **characterized in that** the input current of the inverter flowing through the inductance (L4) is controlled with the voltage of the DC-to-DC converter and the switching of the inverter is synchronized with the input current zero points.

7. A converter according to any one of claims 4 to 6, **characterized in that** the output of the inverter is equipped with an LC filter (C2, L3).

8. A converter according to any one of claims 1 to 7, **characterized in that** the DC to AC converter further comprises a boost circuit adapted to boost the DC source voltage, the output of which boost circuit is connected to the input of the DC to DC converter.
